**Europäisches Patentamt**

**European Patent Office**

**Office européen des brevets**

(11) Veröffentlichungsnummer: **0 219 664 B1**

(12) **EUROPÄISCHE PATENTSCHRIFT**

(45) Veröffentlichungstag der Patentschrift:
**07.12.88**

(51) Int. Cl.⁴: **B 64 F 1/22,** G 05 D 1/02

(21) Anmeldenummer: **86112223.2**

(22) Anmeldetag: **04.09.86**

(54) Schleppfahrzeug für Flugzeuge.

(30) Priorität: **24.09.85 DE 3534044**

(43) Veröffentlichungstag der Anmeldung:
**29.04.87 Patentblatt 87/18**

(45) Bekanntmachung des Hinweises auf die Patenterteilung:
**07.12.88 Patentblatt 88/49**

(84) Benannte Vertragsstaaten:
**AT BE CH FR GB IT LI LU NL SE**

(56) Entgegenhaltungen:
**EP-A- 0 053 994**
**US-A- 4 057 158**

(73) Patentinhaber: **Krauss-Maffei Aktiengesellschaft,
Krauss-Maffei-Strasse 2, D-8000 München 50 (DE)**

(72) Erfinder: **Schuller, Reinhard Dr.-Ing.,
Finsterwalderstrasse 38, D-8000 München 50 (DE)**
Erfinder: **Heiser, Wolfgang, Dipl.-Ing.,
Gröbmühlstrasse 8, D-8060 Dachau (DE)**

ACTORUM AG

### Beschreibung

Die Erfindung bezieht sich auf ein Schleppfahrzeug gemäss dem Oberbegriff des Patentanspruchs 1. Ein derartiges Schleppfahrzeug ist aus der US-A-2 362 981 bekannt.

Das aus der US-A-2 362 981 bekannte Schleppfahrzeug für Flugzeuge weist einen gabelförmigen Rahmen auf, an dessen Innenseiten zwei zangenförmig verstellbare Aufnahmeschaufeln gelagert sind. Zum Aufnehmen des Flugzeug-Bugrades wird der gabelförmige Rahmen etwa rechtwinklig zum Flugzeug positioniert, damit die Aufnahmeschaufeln unter die Lauffläche des Bugrades greifen und letzteres einspannen und hochheben können. Nach erfolgter Aufnahme des Bugrades wird das Schleppfahrzeug so bewegt, dass zwischen den Fahrzeug- und Fahrzeuglängsachsen ein möglichst kleiner Schnittwinkel (nachfolgend als «Ausdrehwinkel» bezeichnet) vorhanden ist. Da die Stabilität des Gespanns Flugzeug-Fahrzeug mit grösser werdendem Ausdrehwinkel sinkt, ist insbesondere bei stärkeren Kurvenfahrten darauf zu achten, dass ein vom Flugzeugtyp abhängiger maximaler Ausdrehwinkel nicht überschritten wird. Ähnliches gilt für die Kräfte, die beim Aufnahmevorgang von den Aufnahmeschaufeln an das Bugfahrwerk angelegt werden: auch hier dürfen spezielle, vom Flugzeugtyp abhängige Maximalwerte für die horizontalen und vertikalen Kraftkomponenten nicht überschritten werden, wenn man eine Beschädigung des Bugfahrwerks vermeiden will.

Die Aufgabe der Erfindung besteht darin, für ein Schleppfahrzeug der eingangs erwähnten Art eine Einrichtung zu schaffen, welche das zu schleppende Flugzeug typenmässig identifiziert sowie beim Schleppvorgang den Ausdrehwinkel ermittelt bzw. überwacht.

Diese Aufgabe wird erfindungsgemäss durch die kennzeichnenden Merkmale des Patentanspruchs 1 gelöst.

Vorteilhafte Ausgestaltungen und Weiterbildungen des erfindungsgemässen Schleppfahrzeugs ergeben sich aus den Unteransprüchen.

Die Erfindung wird nachstehend anhand der Zeichnungen näher erläutert. Es zeigt:

Fig. 1 eine schematisierte Draufsicht auf ein Schleppfahrzeug in einer Stellung relativ zum Bugfahrzeug eines nur mit seinem Bug angedeuteten Flugzeugs, in welcher der Flugzeugtyp anhand einer Messung der Spurweite des Bugfahrwerks ermittelt wird;

Fig. 2 eine schematisierte Ansicht eines Schleppfahrzeugs während des Schleppvorgangs, bei welchem der Ausdrehwinkel zwischen den Schleppfahrzeug- und Flugzeug-Längsachsen laufend ermittelt und überwacht wird;

Fig. 3 ein Blockschaltbild einer zur Messung der Spurweite des Bugfahrwerks vorgesehenen Einrichtung, und

4. ein Blockschaltbild einer zur Messung des Ausdrehwinkels vorgesehenen Einrichtung.

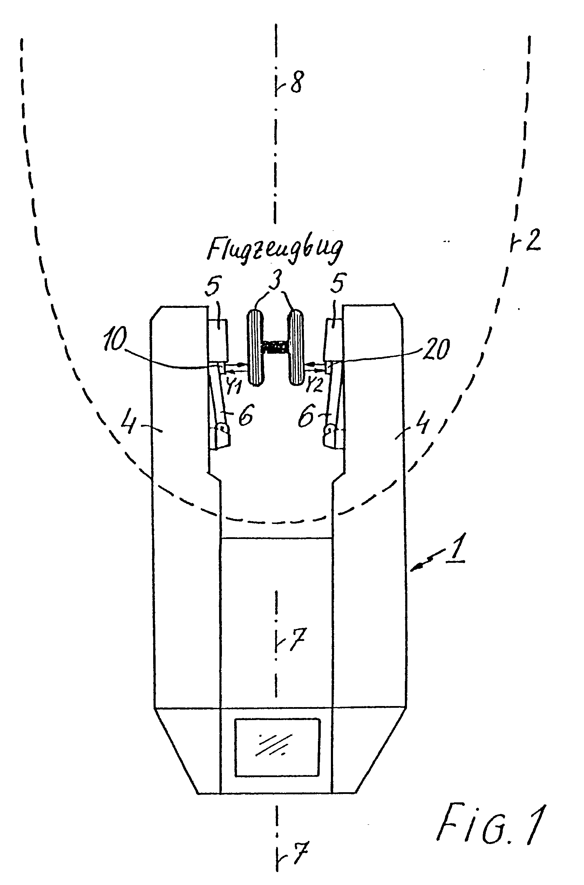

Das in Fig. 1 in Draufsicht dargestellte Schleppfahrzeug 1 ist in einer Position relativ zu dem Rumpf 2 eines nicht näher gezeigten Verkehrsflugzeugs dargestellt, in welcher vor dem Aufnahmevorgang die Spurweite des Bugradlaufwerks 3 (im folgenden einfach als «Bugrad» bezeichnet) gemessen wird, um hieraus den Flugzeugtyp zu ermitteln.

Das dargestellte Schleppfahrzeug 1 weist ein gabelförmiges Rahmenteil 4 auf, an welchem zwei Aufnahmeschaufeln 5 über hydraulisch betätigbare Lenker 6 gelagert sind. Bei dem Aufnahmevorgang wird das Schleppfahrzeug 1 aus der in Fig. 1 gezeigten Messstellung um etwa 90° gedreht, so dass die Flugzeuglängsachse 7 etwa rechtwinklig zur Fluglängsachse 8 verläuft. Das Bugrad 3 befindet sich dabei in seiner Geradlaufstellung entsprechend der Darstellung in Fig. 1.

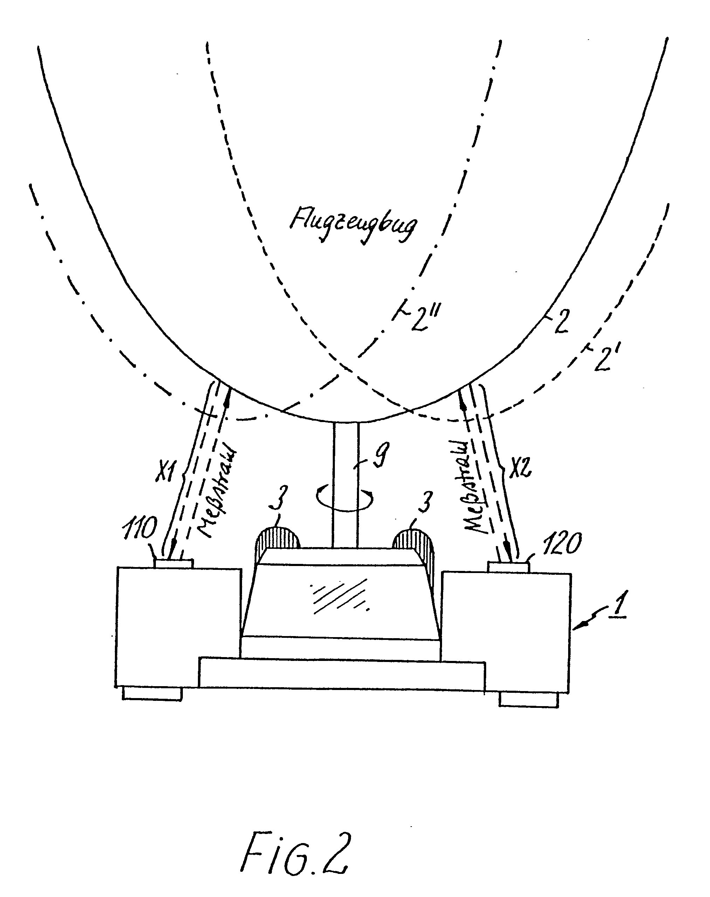

Infolge der erwähnten Drehung des Schleppfahrzeugs 1 können die Aufnahmeschaufeln 5 zangenförmig an die Lauffläche des Bugrades angelegt und anschliessend hochgehoben werden. Nach erfolgter Aufnahme des Bugrades 3 wird das Schleppfahrzeug 1 in die Position gemäss Fig. 1 zurückgedreht, um den Schleppvorgang durchführen zu können. Dabei wird das von den Aufnahmeschaufeln 5 eingespannte Bugrad 3 zusammen mit seiner Bugradsäule 9 (Fig. 2) mitgedreht.

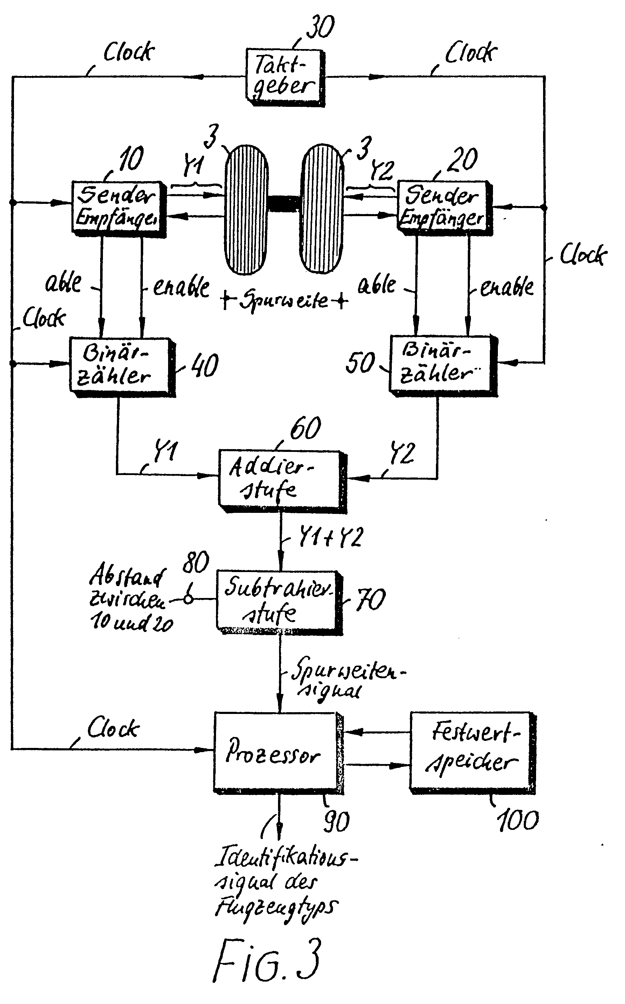

Zur Messung der Spurweite des Bugrades 3 sind im Bereich der Aufnahmeschaufeln 5 zwei Sender/Empfänger 10, 20 am Schleppfahrzeug 1 so angebracht, dass die in Fig. 1 mit Pfeilen angedeuteten Messstrahlen etwa horizontal zwischen den Sender/Empfängern 10, 20 und den benachbarten Stirnflächen des Bugrades 3 verlaufen. Die Abstände Y1, Y2 zwischen den Sender/Empfängern 10, 20 und den benachbarten Stirnflächen des Bugrades 3 ergeben sich aus den Laufzeiten der Messstrahlen. Die gesuchte Spurweite lässt sich aus der Differenz zwischen dem vorgegebenen Abstand der Sender/Empfänger 10, 20 und der Summe der gemessenen Abstände Y1, Y2 ermitteln, wie anhand des Blockschaltbildes nach Fig. 3 erläutert werden soll.

Die Sender/Empfänger 10, 20 arbeiten mit Hilfe von Schallimpulssignalen oder anderen elektromagnetischen Impulssignalen, wobei es hier lediglich darauf ankommt, dass eine berührungslose Messung der Abstände Y1, Y2 erfolgt.

Die Sender/Empfänger 10, 20 werden, wie aus Fig. 3 ersichtlich ist, von einem Taktgeber 30 synchronisiert, welcher ferner die den Sender/Empfängern 10, 20 zugeordneten Binärzähler 40, 50 sowie den für die eigentliche Auswertung vorgesehenen Prozessor 90 synchronisiert. Diese Taktleitungen sind mit «Clock» bezeichnet. Jeder Binärzähler 40, 50 erhält bei der Aussendung eines Messimpulssignals durch den zugeordneten Sender ein Startsignal (Leitung «able») und bei Empfang des betreffenden reflektierten Messimpulssignals ein Stopsignal (Leitung «enable»). Der zwischen Aussendung und Empfang des Messimpulssignals von jedem Binärzähler 40, 50 «zurückgelegte» Zählerstand ist ein Mass für die betreffende Entfernung Y1 bzw. Y2 und wird von jedem Binärzähler 40, 50 einer Addierstufe 60 mitgeteilt. Gleichzeitig werden die Binärzähler 40, 50 wieder rückgesetzt, um bei Empfang des nächsten Startsignals betriebsbereit zu sein.

In einer Subtrahierstufe 70 werden der von einem Geber 80 gelieferte, vorgegebene Abstand zwischen den beiden Sender/Empfängern 10, 20 und das Summensignal der beiden gemessenen Abstände Y1, Y2 (Ausgang der Addierstufe 60) voneinander subtrahiert, woraus die gesuchte Spurweite des Bugrades am Ausgang der Subtrahierstufe resultiert. Dieses Spurweitensignal wird in einem Prozessor 90 mit den Spurweiten verschiedener Flugzeugtypen verglichen, um anhand der ermittelten Spurweite den Flugzeugtyp zu identifizieren. Hierzu kommuniziert der Prozessor 90 mit einem Festwertspeicher 100, in welchem die typspezifischen Spurweiten abgelegt sind. Sobald der Prozessor die ermittelte Spurweite einem bestimmten Flugzeugtyp zugeordnet hat, erzeugt er an seinem Ausgang ein Flugzeugtyp-Identifikationssignal.

Zur Messung des Ausdrehwinkels befinden sich, wie Fig. 2 zeigt, jeweils an der linken und rechten Oberkante der Lateralkontur des Schleppfahrzeugs 1 zwei Sender/Empfänger 110, 120. Gegebenenfalls können die Sender/Empfänger 110, 120 mit den Sender/Empfängern 10, 20 identisch sein, wenn man die Sender/Empfänger schwenkbar anbringt.

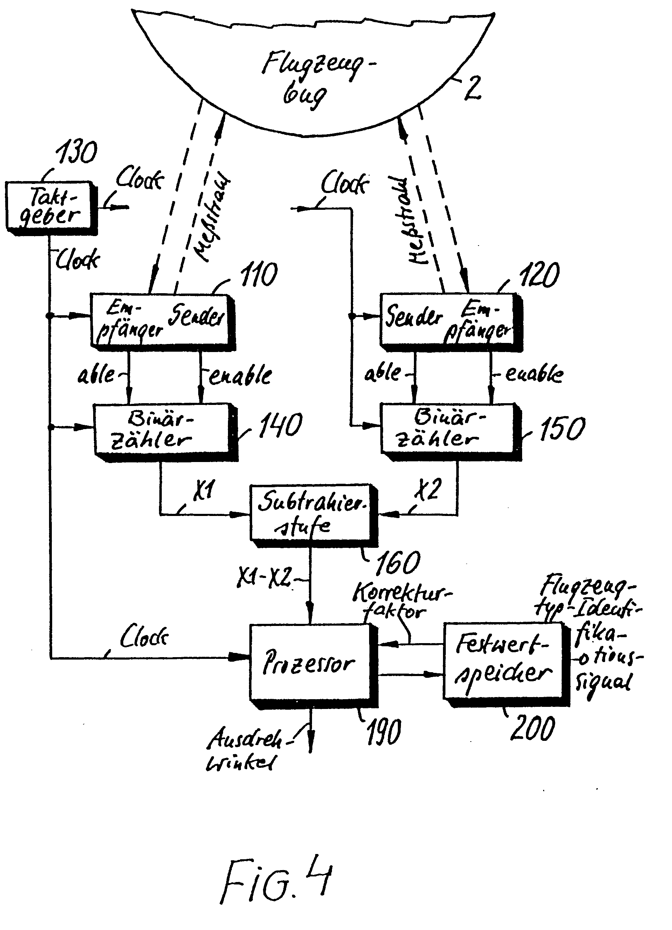

Die Sender/Empfänger 110, 120 sind unter einem konstanten Elevationswinkel bezogen auf die Fahrzeugplattform gegen die Unterseite des Flugzeugrumpfes 2 gerichtet, wie die mit Pfeilen angedeuteten Messstrahlen in Fig. 2 ausweisen. Gemessen werden in diesem Falle die Abstände X1, X2 zwischen Flugzeugrumpf 2 und Sender/Empfängern 110, 120. Falls die Fahrzeuglängsachse 7 und die Flugzeuglängsachse 8 deckungsgleich sind (vgl. Fig. 1), sind die gemessenen Abstände X1, X2 gleich. Dieser Fall ist in Fig. 2 durch einen mit durchzogener Linie gezeichneten Flugzeugrumpf 2 angedeutet. Die gestrichelt bzw. strichpunktiert gezeichneten Positionen 2' bzw. 2'' des Flugzeugrumpfes treten bei einer Links- bzw. Rechtskurve auf, wenn zwischen den Längsachsen 7 und 8 keine Übereinstimmung vorhanden ist. Das Mass der Ausdehnung aus der mit durchgezogener Linie gezeigten Stellung sowie das Vorzeichen der Ausdrehung lässt sich aus der Differenz der beiden gemessenen Abstände bei bekannter Krümmung des typspezifischen Flugzeugbuges 2 ermitteln. Die hierzu erforderlichen Funktionsblöcke sind in Fig. 4 dargestellt, wobei Funktionsblöcke von Fig. 4 durchaus mit Funktionsblöcken in Fig. 3 infolge gleicher Aufgaben identisch sein können.

Die Sender/Empfänger 110, 120 werden von einem Taktgeber 130 synchronisiert, welcher ferner einen für die eigentliche Auswertung vorgesehenen Prozessor 190 synchronisiert. Diese Taktleitungen sind mit «Clock» bezeichnet. Jeder Sender/Empfänger 110, 120 steuert einen zugeordneten Binärzähler 140 bzw. 150 in gleicher Weise, wie dies für die Sender/Empfänger 10, 20 und die Binärzähler 40, 50 vorstehend anhand der Fig. 3 erläutert wurde. Die den gesuchten Abständen X1, X2 entsprechenden Zählerstände der Binärzähler 140, 150 werden in einer Subtrahierstufe 160 voneinander subtrahiert, wobei das Ergebnis nach Betrag und Vorzeichen dem Prozessor 190 mitgeteilt wird. Der Prozessor 190 gewichtet das Subtraktionsergebnis mit einem flugzeugtyp-spezifischen Korrekturfaktor, mit welchem die typspezifische Krümmung des Flugzeugbuges 2 in Ansatz gebracht wird. Der typspezifische Korrekturfaktor wird aus einem Festwertspeicher 200 an den Prozessor 190 ausgelesen, und zwar vorzugsweise unter der Adressierung des Flugzeugtyp-Identifikationssignals am Ausgang des Prozessors 90 gemäss Fig. 2. Denkbar wäre auch eine vom Benutzer jeweils eingegebene Typenidentifikation für den Festwertspeicher 200.

**Patentansprüche**

1. Schleppfahrzeug (1) für Flugzeuge, insbesondere Verkehrsflugzeuge, mit einem gabelförmigen Rahmenteil (4), an welchem zwei zangenförmig bewegbare Aufnahmeschaufeln (5) zum Einspannen und Heben des Flugzeugbugrades (3) gelagert sind, gekennzeichnet durch eine am Schleppfahrzeug (1) angebrachte Einrichtung (10-100, 110-200) zum automatischen, berührungsfreien Messen und Auswerten bestimmter, für den jeweiligen Flugzeugtyp charakteristischer Abstände (X1, X2, Y1, Y2) zwischen der Unterseite des Flugzeugrumpfes (2) und dem Schleppfahrzeug (1) sowie zwischen dem in das gabelförmige Rahmenteil eingefahrenen Bugrad (3) und dem Schleppfahrzeug.

2. Schleppfahrzeug nach Anspruch 1, dadurch gekennzeichnet, dass die Mess- und Auswerteeinrichtung (10-100, 110-200) wenigstens zwei unter gegenseitigem Abstand angebrachte Sender/Empfänger (10, 20; 110, 120) für Schall- oder sonstige Impulssignale aufweist.

3. Schleppfahrzeug nach Anspruch 2, dadurch gekennzeichnet, dass die Sender/Empfänger (110, 120) unter demselben Elevationswinkel bezüglich der Fahrzeugplattform gegen die Unterseite des Flugzeugrumpfes (3) ausrichtbar oder ausgerichtet sind.

4. Schleppfahrzeug nach Anspruch 2, dadurch gekennzeichnet, dass die Sender/Empfänger (10, 20) auf gegenüberliegende Stirnflächen des Bugrades (3) im wesentlichen horizontal ausrichtbar oder ausgerichtet sind.

5. Schleppfahrzeug nach Anspruch 3 oder 4, dadurch gekennzeichnet, dass jedem Sender/Empfänger (10, 20; 110, 120) ein Zähler (40, 50, 140 bzw. 150) zugeordnet ist, welcher beim Aussenden eines Impulssignals gestartet und beim Empfang des betreffenden, am Flugzeugrumpf (2) bzw. am Bugrad (3) reflektierten Impulssignals angehalten wird, wobei die Differenz der Zählerstände bei Aussendung und Empfang eines Impulssignals ein Mass für einen zu messenden Abstand (X1, X2, Y1, Y2) ist.

6. Schleppfahrzeug nach Anspruch 5, dadurch gekennzeichnet, dass eine mit den Zählern (40, 50) verbundene erste Auswerteschaltung (60-100) vorgesehen ist, welche aus der Differenz zwischen dem vorgegebenen Abstand der beiden Sender/Empfänger (10, 20) und der Summe (Y1 + Y2) der ermittelten Abstände (Y1, Y2) zwischen Sender/Empfängern (10, 20) und Bugrad-Stirnflächen die Bugradspurweite ermittelt, den so ermittelten Wert mit gespeicherten Werten von flugzeugtyp-spezifischen Bugradspurweiten vergleicht und aus diesem Vergleich ein Flugzeugtyp-Identifikationssignal ableitet.

7. Schleppfahrzeug nach Anspruch 5, dadurch gekennzeichnet, dass eine mit den Zählern (140, 150) verbundene zweite Auswerteschaltung (160-200) vorgesehen ist, welche aus der Differenz der momentan ermittelten Abstände (X1, X2) zwischen Sender/Empfängern (110, 120) und Flugzeugrumpf (2) sowie einem für jeden Flugzeugtyp gespeicherten Korrekturfaktor den Wert des momentanen Ausdrehwinkels zwischen den Längsachsen (7, 8) des Schleppfahrzeugs (1) und des geschleppten Flugzeugs ermittelt.

8. Schleppfahrzeug nach Anspruch 7, dadurch gekennzeichnet, dass der gespeicherte Korrekturfaktor nach Massgabe des Flugzeugtyp-Identifikationssignals abgerufen wird.

9. Schleppfahrzeug nach Anspruch 2, 3, 5, 7 und 8, dadurch gekennzeichnet, dass die beiden zur Messung des Ausdrehwinkels bestimmten Sender/Empfänger (110, 120) an der linken und rechten Lateralkontur des Schleppfahrzeugs (1) unter einem Elevationswinkel von 70° bis 80° angebracht sind.

10. Schleppfahrzeug nach Anspruch 2, 4, 5, 6 und 8, dadurch gekennzeichnet, dass die beiden zur Flugzeugtyp-Identifikation bestimmten Sender/Empfänger (10, 20) im Bereich der Aufnahmeschaufeln (5) angebracht sind.

## Claims

1. Tractor vehicle (1) for aircraft, particularly traffic aircraft, with a bifurcated frame part (4) on which are mounted two receiving blades (5) for clamping and lifting the nose wheel (3) of the aircraft and being adapted to perform a pincer-like movement, characterised by, mounted on the tractor vehicle (1) a device (10-100, 110-200) for the automatic contact-free measurement and evaluation of specific distances (X1, X2, Y1, Y2) between the underside of the aircraft fuselage (2) and the tractor vehicle (1) which are characteristic of the relevant aircraft type, and between the tractor vehicle and the nose wheel (3) which is retracted into the bifurcated frame part.

2. Tractor vehicle according to Claim 1, characterised in that the measuring and evaluating means (10-100, 110-200) comprise at least two mutually spaced apart transmitters/receivers (10, 20; 110, 120) for sonic or other pulse-type signals.

3. Tractor vehicle according to Claim 2, characterised in that the transmitters/receivers (110, 120) can be or are aligned at the same angle of elevation in respect of the vehicle platform and against the underside of the aircraft fuselage (3).

4. Tractor vehicle according to Claim 2, characterised in that the transmitters/receivers (10, 20) are or can be aligned substantially horizontally on opposite end faces of the nose wheel (3).

5. Tractor vehicle according to Claim 3 or 4, characterised in that there is associated with each transmitter/receiver (10, 20; 110, 120) a counter (40, 50, 140, 150) which is started when a pulsed signal is emitted and stopped upon receipt of the relevant pulsed signal reflected from the underside (2) of the fuselage or from the nose wheel (3), the difference between counter readings when sending out and receiving a pulsed signal being a measure of a distance (X1, X2, Y1, Y2) which is to be measured.

6. Tractor vehicle according to Claim 5, characterised in that a first evaluating circuit (60-100) is provided which is connected to the counters (40, 50) and which, from the difference between the given distance between the two transmitters/receivers (10, 20) and the sum (Y1 + Y2) of the ascertained distance (Y1, Y2) between transmitters/receivers (10, 20) and nose wheel end faces, the nose wheel track width can be ascertained, the consequent value being compared with stored values of nose wheel track widths which are specific to a particular type of aircraft, a signal identifying the aircraft type being derived from this comparison.

7. Tractor vehicle according to Claim 5, characterised in that a second evaluating circuit (160-200) is provided which is connected to the counters (140, 150) and which from the difference between distances (X1, X2) ascertained at any given time between transmitters/receivers (110, 120) and aircraft fuselage (2) and a correction value stored for each type of aircraft, ascertains the value of the angle of deflection at any given time between the longitudinal axes (7, 8) of the tractor vehicle (1) and of the towed aircraft.

8. Tractor vehicle according to Claim 7, characterised in that the stored correction factor is called forward as decided by the aircraft type identification signal.

9. Tractor vehicle according to Claim 2, 3, 5, 7 and 8, characterised in that the two transmitters/receivers intended for measuring the angle of outwards rotation (110, 120) are mounted at the left and right lateral contours of the tractor vehicle (1) at an angle of elevation of 70° to 80°.

10. Tractor vehicle according to Claim 2, 4, 5, 6 and 8, characterised in that the two transmitters/receivers (10, 20) intended for aircraft type identification are mounted in the region of the receiving blades (5).

## Revendications

1. Véhicule tracteur (1) pour avions, en particulier des avions de transport, ce véhicule comportant une partie formant châssis (4) en forme de fourche sur laquelle sont montées deux palettes (5) mobiles de saisie ou de réception en forme de pinces, destinées à serrer et à soulever le train avant (3) de l'avion, véhicule tracteur caractérisé en ce qu'il comporte un dispositif (1-100; 110-200) placé sur le véhicule tracteur (1) et destiné à mesurer automatiquement sans contact et à exploiter des distances (X1, X2, Y1, Y2) déterminées caractéristiques du type d'avion considéré, entre la face inférieure de l'avant du fuselage (2) de l'avion et le véhicule tracteur (1) ainsi qu'entre le train avant (3) introduit dans la partie formant châssis en forme de fourche et le véhicule tracteur.

2. Véhicule tracteur selon la revendication 1, caractérisé en ce que le dispositif (10-100, 110-200) de mesure et d'exploitation présente au moins deux émetteurs/récepteurs (10, 20; 110, 120) disposés à une certaine distance mutuelle et destinés à émettre et recevoir des impulsions soniques ou autres.

3. Véhicule tracteur selon la revendication 2, caractérisé en ce que les émetteurs/récepteurs (110, 120) peuvent être dirigés ou sont dirigés avec le même angle d'élévation, par rapport à la plate-forme du véhicule, vers la face inférieure de l'avant du fuselage (2) de l'avion.

4. Véhicule tracteur selon la revendication 2, caractérisé en ce que les émetteurs/récepteurs (10, 20) peuvent être dirigés ou sont dirigés sensiblement horizontalement en direction des surfaces frontales du train avant (3).

5. Véhicule tracteur selon la revendication 3 ou 4, caractérisé en ce qu'à chaque émetteur/récepteur (10, 20; 110, 120) est affecté un compteur (40, 50; 140 ou 150) qui démarre lors de l'émission d'une impulsion et qui s'arrête lors de la réception de l'impulsion concernée, réfléchie sur l'avant (2) de l'avion, ou sur le train avant (3), la différence des décomptes des compteurs lors de l'émission et de la réception de l'impulsion constituant la mesure d'une distance (X1, X2, Y1, Y2) à mesurer.

6. Véhicule tracteur selon la revendication 5, caractérisé en ce qu'un premier circuit d'exploitation (60-100) relié aux compteurs (40, 50) est prévu, lequel détermine l'écartement des roues avant à partir de la différence entre la distance, fixée à l'avance, qui sépare les deux émetteurs/récepteurs (10, 20) et de la somme (Y1 + Y2) des distances déterminées entre les émetteurs/récepteurs (10, 20) et les surfaces frontales du train avant, compare la valeur ainsi déterminée avec les valeurs mises en mémoire des écartements de roues avant, spécifiques du type d'avion, et déduit de cette comparaison un signal d'identification du type d'avion.

7. Véhicule tracteur selon la revendication 5, caractérisé en ce qu'un deuxième circuit d'exploitation (160-200) relié aux compteurs (140, 150) est prévu, lequel calcule à partir de la différence des distances (X1, X2) déterminées de façon instantanée, entre les émetteurs/récepteurs (110, 120) et l'avant (2) de l'avion ainsi qu'à partir d'un facteur de correction mis en mémoire pour chaque type d'avion, la valeur de l'angle instantané de remorquage formé entre les axes longitudinaux (7, 8) du véhicule tracteur (1) et de l'avion remorqué (8).

8. Véhicule tracteur selon la revendication 7, caractérisé en ce que le facteur de correction enregistré est appelé en fonction du signal d'identification du type d'avion.

9. Véhicule tracteur selon l'une des revendications 2, 3, 5, 7 et 8, caractérisé en ce que les deux émetteurs/récepteurs (110, 120) affectés à la mesure de l'angle de remorquage sont placés sur le profil latéral gauche et sur le profil latéral droit du véhicule tracteur (1) avec un angle d'élévation de 70° à 80°.

10. Véhicule tracteur selon l'une des revendications 2, 4, 5, 6 et 8, caractérisé en ce que les deux émetteurs/récepteurs (10, 20) destinés à l'identification du type d'avion sont disposés dans la zone des palettes réceptrices (5).

Flugzeugbug

FIG.1

FIG.2

*30*
Taktgeber

Clock

Clock

*10* Y1 *3*  *3* Y2 *20*

Sender
Empfänger

Spurweite

Sender
Empfänger

Clock

able   enable   able   enable

Clock

Binärzähler *40*

*50* Binärzähler

*60*

Y1   Addierstufe   Y2

Y1+Y2

Abstand
zwischen *80*
10 und 20   Subtrahierstufe *70*

Spurweitensignal

Clock   Prozessor   Festwertspeicher

*90*   *100*

Identifikationssignal des
Flugzeugtyps

FIG.3

*130* Taktgeber

Clock

Clock

Clock

Flugzeug-bug

2

Meßstrahl

Meßstrahl

*110* Empfänger Sender

*120* Sender Empfänger

able — enable

able — enable

*140* Binär-zähler

*150* Binär-zähler

X1

Subtrahier-stufe

X2

*160*

X1-X2

Korrektur-faktor

Flugzeug-typ-Identifi-kations-signal

Clock

Prozessor

Festwert-speicher

Ausdreh-winkel

*190*

*200*

FIG. 4